# EUROPEAN PATENT SPECIFICATION

(11) **EP 1 785 342 B1**
(45) Date of publication and mention of the grant of the patent: **07.03.2012**
(21) Application number: 06023003.4
(22) Date of filing: 06.11.2006
(51) Int. Cl.: B62J 6/18, B62J 15/00

(54) **Cable-guide structure for cycles**
Kabelhalter für Fahrräder
Dispositif d'attache de câble pour cycles

(30) Priority: 14.11.2005 IT VI20050301
(43) Date of publication of application: 16.05.2007
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Bettello, Pietro

(56) References cited:
- EP-A- 0 691 262
- DE-C- 737 669
- DE-C- 926 955
- FR-A- 1 506 469
- FR-A1- 2 848 979

## Description

The present finding refers to a cable-guide structure, particularly for cycles, adapted to be used to make the electrical systems of bicycles.

As known, as technology and aesthetic tastes progress, the cabling of electrical systems of cycles, and of bicycles in particular, has progressively evolved over time from a simple conductor partially wound on the frame, or on some of its accessories. This type of solution, whilst allowing electrical systems to be made that worked perfectly well, did in reality have multiple limitations both from the functional point of view, since the conductors were continually exposed to the risk of interruption due to accidental mechanical actions, and from the aesthetic point of view, since the conductors themselves were arranged in more or less ingenious and bizarre ways.

To overcome this drawback, in the last few years, the general tendency has been to use metal mudguards with insulating coatings, and to exploit the conduction through such mudguards to actually replace entire portions of the wired electrical system. This type of solution does, however, generate some problems in terms of safety that, in order to respect increasingly rigorous standards aimed at safeguarding the health of users, have led to the total elimination of directly accessible parts subjected to the passage of electrical current.

Documents FR-A-1506469, DE-C-926955, EP-A-0691262 describe cable-guide structures, particularly for cycles, which whilst allowing the electrical system of a bicycle to be wired, allow electrical conduction through the mudguards to be totally eliminated.

The task of the invention is to realize a similar cable - guide structure that is easier and faster to apply on respect of the cited devices of the prior art.

The task outlined above, as well as the aforementioned purposes and others than will become clearer hereafter, are accomplished by a cable-guide structure, particularly for cycles, comprising at least one interlockable sheath, adapted to be applied inside a mudguard , said structure comprising adaptable support means, which are realized according the characterising portion of claim 1.

Further characteristics and advantages shall become clearer from the description of a preferred but not exclusive embodiment of a cable-guide structure, according to the finding, illustrated for indicating and not limiting purposes in the attached drawings, in which:

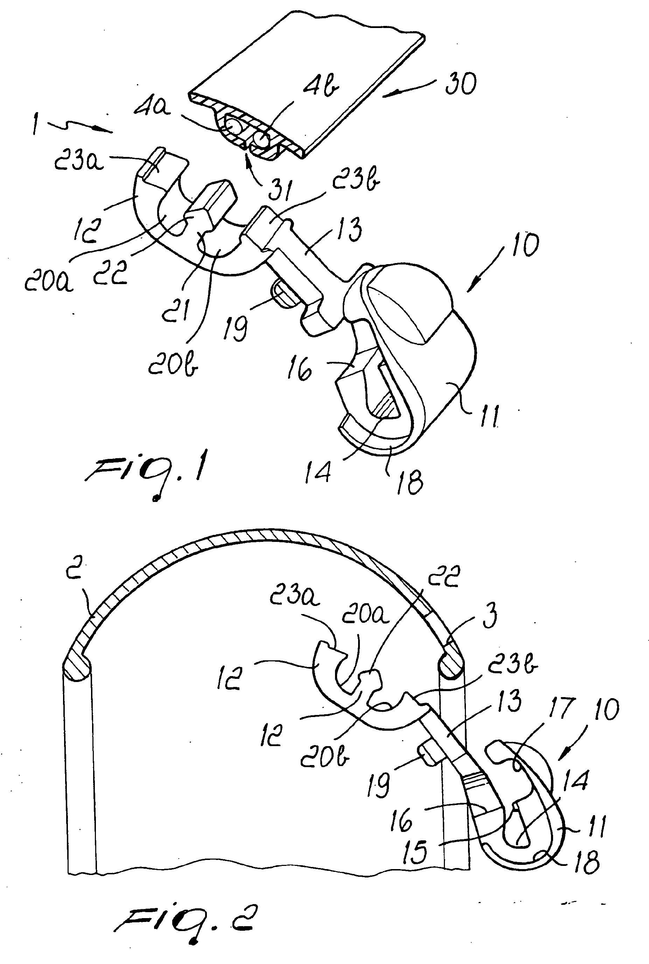

- figure 1 is a perspective view of the elements of a cable-guide structure according to the finding;
- figure 2 is a front view partially in section of an installation step onto a mudguard of an element of a cable-guide structure according to the finding;

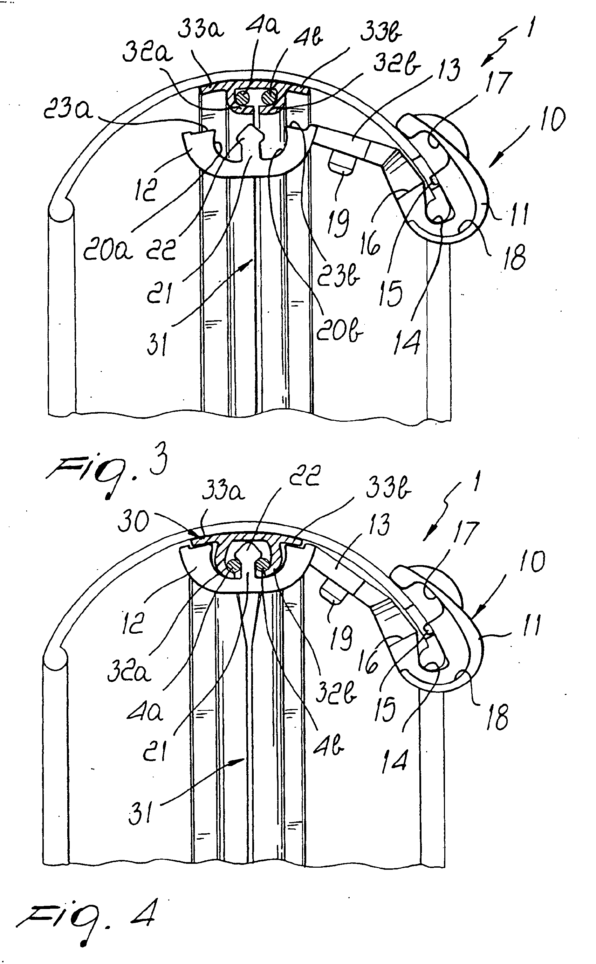

- figure 3 is a front view partially in section of another installation step onto a mudguard of a cable-guide structure according to the finding;
- figure 4 is a front view partially in section of a further installation step onto a mudguard of a cable-guide structure according to the finding;

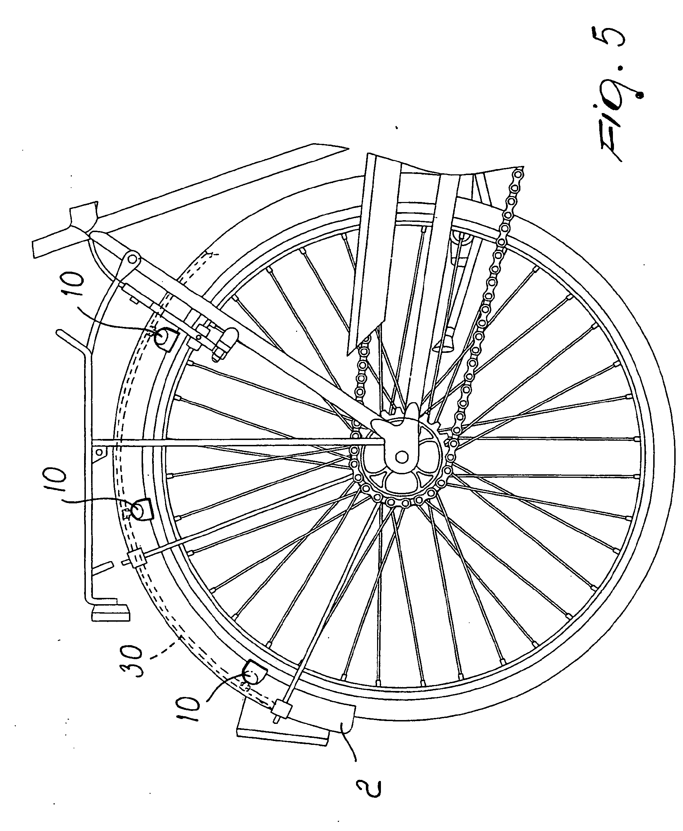

- figure 5 is a side view of an example of application of a cable-guide structure according to the finding.

With reference to the quoted figures, the cable-guide structure, particularly for cycles, globally indicated with reference numeral 1, comprises, according to the finding, adaptable support means, actually consisting of a plurality of double-coupling clamps 10 and an interlockable sheath 30, adapted to be removably associated with each other so as to be able to position the latter in the inner part of a mudguard 2.

In this case, each double-coupling clamp 10, advantageously made by moulding of plastic material, comprises a fixing member 11 and a shaped jaw 12, joined in a single piece by a flexible stem 13. The fixing member 11 defines a guide 14, with a cross section substantially matching the cross section of the side edge of the mudguard 2, generally made in standard dimensions. In this way, it is possible to join each double-coupling clamp 10 to the side edge of the mudguard 2, associating the outer portion of the fixing member 11 to the back of the mudguard 2 and the inner portion to the inner part thereof. A tooth 15, defined on the surface of the guide 14 relative to the outer portion of the fixing member 11, may allow each double-coupling clamp 10 to be removably snap-engaged with a through hole 3 defined near to the side edge of the mudguard 2. On the inner portion of the fixing member 11 a recess 16 is defined, advantageously U-shaped and positioned so as to intercept the through hole 3, whereas on the outer portion of the fixing member 11 a through groove 17 is defined, transversally to the longitudinal axis of the double-coupling clamp 10, with the opening facing towards the guide 14, so as to intercept the through hole 3. On the side of the fixing member 11 a saddleback 18 is defined, which substantially encircles the profile of the guide 14, at the same time intercepting the through groove 17, the recess 16 and the guide 14 itself. As outlined previously, the flexible stem 13, which is made with a plastically deformable structure and comprises a substantially T-shaped ridge 19, joins the fixing member 11 to the shaped jaw 12, which comprises a pair of contiguous concavities 20a and 20b separated by a partition 21, which has a harpoon-shaped end 22. On the side of each concavity 20, a hollow 23a and a hollow 23b are respectively defined, which join together with them.

The interlockable sheath 30, which can advantageously be made by extrusion or by moulding, and receives a pair of conductors 4a and 4b inside it, can be removably associated with the shaped jaw 12 of each double-coupling clamps 10. It substantially consists of a dilating tubular body provided, over its entire length, with a longitudinal notch 31 that defines a pair of edges 32a and 32b, of a shape substantially matching that of the concavities 20. In a variant embodiment, the longitudinal notch 31 can easily be replaced with a plurality of longitudinal slits, not identified in the attached figures, defined also in this case longitudinally over the entire length of the dilating tubular body, but this time at predetermined points, so as to just locally define some edges 32. To make it easier for the interlockable sheath 30 to rest on a substantially flat surface, like that on the inner part of the mudguard 2, avoiding accidental rotations thereof, a pair of support strips 33a and 33b are arranged on the side of the dilating tubular body, diametrically opposite the longitudinal notch 31.

The operation and the way of using the structure according to the finding are the following.

In a first way of use, in which the mudguard 2 of a bicycle has a plurality of through holes 3 defined near to its side edge, a piece of interlockable sheath 30, of sufficient length to protect the portion of the electrical system relative to the mudguard 2 and such as to contain a pair of conductors 4 of appropriate size, simply slotted inside the dilating tubular body or introduced through the longitudinal notch 31, is positioned in the inner part of the mudguard 2, resting its support strips 33 at the surface, so as to avoid accidental rotations thereof. Consecutively, each double-coupling clamp 10 is firstly removably joined to the mudguard 2, associating the side edge of the latter to the guide 14 and snap-engaging the tooth 15 at the through hole 3, and then removably joined to the interlockable sheath 30.

Specifically, by also exploiting the plasticity of the flexible stem 30, the shaped jaw 12 is rested on the interlockable sheath, which contains the conductors 4, and a pressure is exerted such as to make the harpoon 22 slip into the notch 31 or into the longitudinal slit. In this way, the conductors 4 are suitably moved by the harpoon 22 that, together with the partition 21, compresses them against the edges 32, resting at the concavities 20, removably engaging the double-coupling clamp 10 with the interlockable sheath 30 and arranging the support strips 33 in the hollows 23. According to this first possible use, to allow the cable 4 to pass from the inner part of the mudguard 2, where a great deal of the conductors of the electrical system is arranged, to the back part, where the lights are generally located, one of the through holes 3 is used. The conductor 4, removed from the sheath 30 up to the double-coupling clamp 10 closest to a light, or to the possible dynamo, and kept housed by the shaped ridge 19, is firstly introduced into the recess 16, then slotted into the through hole 3 and finally removed from the end of the through groove 17 closest to the point of interest.

In a second way of use, in which the mudguard 2 instead lacks the through holes 3, the initial operations described in the previous context are to a large extent repeated, of course apart from the snap engagement of the tooth 15 that in this case holds the double-coupling clamp 10 on the mudguard-2 by simple pressure. The difference can be seen in the passage of the cable 4 from the inner part of the mudguard 2 to the back part, carried out here by removing the conductor 4 from the sheath 30 up to the double-coupling clamp 10, engaging it with the shaped ridge 19, resting it in the saddleback 18 and finally removing it from the end of the through groove 17 closest to the point of interest.

In both ways described above, the interlockable sheath 30 and the conductors 4 can also be correctly sized through two different, although equally efficient and practical, systems. In the first system, the correct size of both of the elements, still separate or else already coupled, is determined and regulated prior to assembly that consequently occurs without the addition of particular provisions, whereas in the second system a piece of interlockable sheath 30 containing the conductors 4, of standardised length and longer than necessary, is joined to the mudguard 2. In this case, with the application of the double-coupling clamps 10, at the same time as the interlockable sheath 30 is removably fixed to the mudguard 2, the extreme points of the useful portion thereof are also determined. Thereafter, it is possible to remove a part of the two conductors 4 through the notch 31, leaving the portion thereof located between the two double-coupling clamps 10 that define the two extreme points intact, and finally to trim the excess portion of interlockable sheath 30.

In practice, it has been noted how the cable-guide structure, particularly for cycles, according to the finding entirely fulfils the predetermined task, since it ensures the possibility of universally making an electrical system for a bicycle totally eliminating electrical conduction through the mudguards, whilst still remaining simple to make and particularly pleasing to the eye.

The cable-guide structure thus conceived can undergo numerous modifications and variations all of which are covered by the inventive concept ; moreover, all of the details can be replaced with other technically equivalent elements.

In practice, the materials used, provided that they are compatible with the specific use, as well as the sizes and the contingent shapes can be whatever according to requirements and the state of the art.

## Claims

1. Cable-guide structure, for cycles, comprising at least one interlockable sheath (30), adapted to be applied inside a mudguard (2) said structure comprising adaptable support means
**characterised in that** said adaptable support means comprise a plurality of double-coupling clamps (10), adapted to be removably applied to said mudguard (2) and adapted to be removably associated with said interlockable sheath, said interlockable sheath (30) being held in its seat by said double-coupling clamps (10).

2. Cable-guide structure, according to the previous claim, **characterised in that** each of said double-coupling clamps (10) comprises at least one fixing member (11) and at least one shaped jaw (12), joined by a flexible stem (13).

3. Cable-guide structure, according to the previous claim, **characterised in that** said fixing member comprises a guide (14), with a cross section substantially matching the cross section of the side edge of said mudguard (2), each of said double-coupling clamps (10) being adapted to be associated with said side edge of said mudguard (2).

4. Cable-guide structure, according to previous claim 3 or 4, **characterised in that** said fixing member comprises a recess (16), defined on, the inner portion of said fixing member (11), at a through hole (3) defined on said mudguard (2), said inner portion of said fixing member (11) being adapted to be located in the portion that can be associated with the inner part of said mudguard (2).

5. Cable-guide structure, according to the previous claim, **characterised in that** said fixing member (11) comprises a through groove (17), defined on the outer portion of said fixing member (11), transversally to the longitudinal axis of said double-coupling clamp (10) and at said recess (16), so as to intercept said through hole (3), said outer portion of said fixing member (11) being adapted to be located in the portion that can be associated with the inner part of said mudguard (2).

6. Cable-guide structure, according to the previous claim, **characterised in that** said fixing member (11) comprises a tooth (15), defined on the surface of said guide (14) relative to said outer portion, close to said through groove (17) and at said through hole (3), to removably snap-engage said fixing member (11) to said mudguard (2).

7. Cable-guide structure, according to previous claim 5 or 6, **characterised in that** said fixing member (11) comprises a saddleback (18), defined on the side of said fixing member (11) so as to simultaneously intercept said recess (16), said through groove (17) and said guide (14).

8. Cable-guide structure according to one or more of the previous claims 2 to 7, **characterised in that** said flexible stem (13) comprises a substantially T-shaped ridge (19).

9. Cable-guide structure, according to one or more of the previous claims 2 to 8, **characterised in that** said shaped jaw (12) comprises a pair of contiguous concavities (20a, 20b) separated by a partition (21).

10. Cable-guide structure, according to the previous claim, **characterised in that** said partition (21) comprises a harpoon (22), defined on its free end.

11. Cable-guide structure, according to previous claim 9 or 10, **characterised in that** said shaped jaw (12) comprises a pair of hollows (23a, 23b), respectively defined on the side of each of said concavities (20a, 20b).

12. Cable-guide structure, according to the previous claim, **characterised in that** said interlockable sheath (30) comprises a dilating tubular body, with a cross section substantially matching the cross section of said pair of concavities (20a, 20b), said interlockable sheath (30) being adapted to be removably associated with said shaped jaw (12).

13. Cable-guide structure, according to the previous claim, **characterised in that** said dilating tubular body comprises a longitudinal notch (31), defined on said dilating tubular body, longitudinally and for its entire length, said notch defining a pair of edges (32).

14. Cable-guide structure, according to the previous claim, **characterised in that** said dilating tubular body comprises a plurality of longitudinal slits, defined on said dilating tubular body, longitudinally and for its entire length, said longitudinal slits being arranged on predetermined points to just locally define said edges (32a, 32b).

15. Cable-guide structure, according to the previous claim, **characterised in that** said dilating tubular body comprises a pair of support strips (33a, 33b), made in a single piece with said tubular body and defined in diametrically opposite position to said notch (31), or to said plurality of longitudinal slits, and having a cross section substantially matching the cross section of said pair of hollows (23a, 23b).

## Patentansprüche

1. Kabelhalterstruktur für Fahrräder, umfassend mindestens einen verschließbaren Mantel (30), der dazu geeignet ist, innerhalb des Schutzbleches (2) der Kabelhalterstruktur angebracht werden, wobei die Struktur anpassbare Halterungsmittel umfasst, **dadurch gekennzeichnet, dass** die anpassbaren Halterungsmittel mehrere Doppelklemmschellen (10) umfassen, die dazu geeignet sind, abnehmbar an dem Schutzblech (2) befestigt und mit dem verschließbaren Mantel verbunden zu werden, wobei der verschließbare Mantel (30) durch die Doppelklemmschellen (10) in seinem Sitz gehalten wird.

2. Kabelhalterstruktur nach dem vorstehenden Anspruch, **dadurch gekennzeichnet, dass** jede Doppelklemmschelle (10) mindestens ein Befestigungsteil (11) und mindestens eine geformte Backe (12) umfasst, die durch einen flexiblen Schaft (13) verbunden ist.

3. Kabelhalterstruktur nach dem vorstehenden Anspruch, **dadurch gekennzeichnet, dass** das Befestigungsteil eine Führung (14) mit einem Querschnitt umfasst, der im Wesentlichen dem Querschnitt der Seitenkante des Schutzbleches (2) entspricht, wobei jede Doppelklemmschelle (10) dazu geeignet ist, mit der Seitenkante des Schutzbleches (2) verbunden zu werden.

4. Kabelhalterstruktur nach Anspruch 3 oder 4, **dadurch gekennzeichnet, dass** das Befestigungsteil eine Aussparung (16), die auf dem inneren Anteils des Befestigungsteils (11) definiert ist, in einem durchgehenden Loch (3) umfasst, das auf dem Schutzblech (2) definiert ist, wobei der innere Anteil des Befestigungsteils (11) dazu geeignet ist, an dem Anteil untergebracht zu werden, der mit dem inneren Anteil des Schutzbleches (2) verbunden werden kann.

5. Kabelhalterstruktur nach dem vorstehenden Anspruch, **dadurch gekennzeichnet, dass** das Befestigungsteil (11) eine durchgehende Nut (17) umfasst, die auf dem äußeren Anteil des Befestigungsteils (11) quer zur Längsachse der Doppelklemmschelle (10) an der Aussparung (16) definiert ist, so dass das durchgehende Loch (3) unterbrochen wird, wobei der äußere Anteil des Befestigungsteils (11) dazu geeignet ist, in dem Anteil untergebracht zu werden, der mit dem inneren Anteil des Schutzbleches (2) verbunden werden kann.

6. Kabelhalterstruktur nach dem vorstehenden Anspruch, **dadurch gekennzeichnet, dass** das Befestigungsteil (11) einen Zahn (15) umfasst, der auf der Oberfläche der Führung (14) bezüglich zum äußeren Anteil nahe der durchgehenden Nut (17) und an dem durchgehenden Loch (3) definiert ist, so dass das Befestigungsteil (11) abnehmbar in das Schutzblech (2) einrasten kann.

7. Kabelhalterstruktur nach den vorstehenden Ansprüchen 5 oder 6, **dadurch gekennzeichnet, dass** das Befestigungsteil (11) einen Sattel (18) umfasst, der auf der Seite des Befestigungsteils (11) definiert ist, so dass die Aussparung (16), die durchgehende Nut (17) und die Führung (14) gleichzeitig unterbrochen werden.

8. Kabelhalterstruktur nach einem oder mehreren der vorstehenden Ansprüche 2 bis 7, **dadurch gekennzeichnet, dass** der flexible Schaft (13) einen im Wesentlichen T-förmigen Rücken (19) umnfasst.

9. Kabelhalterstruktur nach einem oder mehreren der vorstehenden Ansprüche 2 bis 8, **dadurch gekennzeichnet, dass** die geformte Backe (12) ein Paar nebeneinander liegende Hohlwölbungen (20a, 20b) umfasst, die durch eine Trennwand (21) getrennt sind.

10. Kabelhalterstruktur nach dem vorstehenden Anspruch, **dadurch gekennzeichnet, dass** die Trennwand (21) eine Harpune (22) umfasst, die an ihrem freien Ende definiert ist.

11. Kabelhalterstruktur nach den vorstehenden Ansprüchen 9 oder 10, **dadurch gekennzeichnet, dass** die geformte Backe (12) ein Paar Hohlräume (23a, 23b) umfasst, die jeweils auf der Seite einer jeden Hohlwölbung (20a, 20b) definiert sind.

12. Kabelhalterstruktur nach dem vorstehenden Anspruch, **dadurch gekennzeichnet, dass** der verschließbare Mantel (30) einen dehnbaren, schlauchförmigen Körper mit einem Querschnitt umfasst, der im Wesentlichen dem Querschnitt des Paares von Hohlwölbungen (20a, 20b) entspricht, wobei der verschließbare Mantel (30) dazu geeignet ist, abnehmbar mit der geformten Backe (12) verbunden zu werden.

13. Kabelhalterstruktur nach dem vorstehenden Anspruch, **dadurch gekennzeichnet, dass** der dehnbare, schlauchförmige Körper eine Längskerbe (31) umfasst, die auf dem dehnbaren, schlauchförmigen Körper über seine gesamte Länge hinweg längs definiert ist, wobei die Kerbe ein Paar Kanten (32) definiert.

14. Kabelhalterstruktur nach dem vorstehenden Anspruch, **dadurch gekennzeichnet, dass** der dehnbare, schlauchförmige Körper mehrere Längsschlitze umfasst, die auf dem dehnbaren, schlauchförmigen Körper über seine gesamte Länge hinweg längs definiert sind, wobei die Längsschlitze an zuvor festgelegten Stellen angeordnet sind, um die Kanten (32a, 32b) nur örtlich zu definieren.

15. Kabelhalterstruktur nach dem vorstehenden Anspruch, **dadurch gekennzeichnet, dass** der dehnbare, schlauchförmige Körper ein Paar Stützstreifen (33a, 33b) umfasst, die einstückig mit dem schlauchförmigen Körper angefertigt und in diametral gegenüberliegender Position zur Kerbe (31) oder zu den mehreren Längsschlitzen definiert sind, und einen Querschnitt besitzt, der im Wesentlichen dem Querschnitt des Paares von Hohlräumen (23a, 23b) entspricht.

## Revendications

1. Dispositif d'attache de câble pour cycles, comprenant au moins une gaine interverrouillable (30), adaptée pour être appliquée à l'intérieur d'un garde-boue (2), ledit dispositif comprenant des moyens de support adaptables, **caractérisé en ce que** lesdits moyens de support adaptables comprennent une pluralité de pinces à double couplage (10) adaptées pour être appliquées de manière amovible audit garde-boue (2), et adaptées pour être associées de manière amovible à ladite gaine interverrouillable, ladite gaine interverrouillable (30) étant maintenue dans son siège par lesdites pinces à double couplage (10).

2. Dispositif d'attache de câble, selon la revendication précédente, **caractérisé en ce que** chacune desdites pinces à double couplage (10) comprend au moins un élément de fixation (11) et au moins une mâchoire profilée (12), j oints par une tige flexible (13).

3. Dispositif d'attache de câble, selon la revendication précédente, **caractérisé en ce que** ledit élément de fixation comprend un guide (14), avec une section transversale correspondant substantiellement à la section transversale du bord latéral dudit garde-boue (2), chacune desdites pinces à double couplage (10) étant adaptée pour être associée audit bord latéral dudit garde-boue (2).

4. Dispositif d'attache de câble, selon la revendication précédente 3 ou 4, **caractérisé en ce que** ledit élément de fixation comprend un retrait (16), défini sur la partie interne dudit élément de fixation (11), en correspondance d'un orifice passant (3) défini sur ledit garde-boue (2), ladite partie interne dudit élément de fixation (11) étant adaptée pour être située dans la partie qui peut être associée à la partie interne dudit garde-boue (2).

5. Dispositif d'attache de câble, selon la revendication précédente, **caractérisé en ce que** ledit élément de fixation (11) comprend un sillon passant (17), défini sur la partie externe dudit élément de fixation (11), transversalement par rapport à l'axe longitudinal de ladite pince à double couplage (10) et audit retrait (16), de manière à intercepter ledit orifice passant (3), ladite partie externe dudit élément de fixation (11) étant adaptée pour être située dans la partie qui peut être associée à la partie interne dudit garde-boue (2).

6. Dispositif d'attache de câble, selon la revendication précédente, **caractérisé en ce que** ledit élément de fixation (11) comprend une dent (15), définie sur la surface dudit guide (14), par rapport à la partie externe, à proximité dudit sillon passant (17) et en correspondance dudit orifice passant (3), pour encliqueter de manière amovible ledit élément de fixation (11) audit garde-boue (2).

7. Dispositif d'attache de câble, selon la revendication précédente 5 ou 6, **caractérisé en ce que** ledit élément de fixation (11) comprend un dos de selle (18), défini sur le côté dudit élément de fixation (11), de manière à intercepter simultanément ledit retrait (16), ledit sillon passant (17) et ledit guide (14).

8. Dispositif d'attache de câble, selon les revendications précédentes 2 à 7, **caractérisé en ce que** ladite tige flexible (13) comprend une arête substantiellement en forme de T (19).

9. Dispositif d'attache de câble, selon les revendications précédentes 2 à 8, **caractérisé en ce que** ladite mâchoire profilée (12) comprend une paire de concavités contiguës (20a, 20b) séparées par une séparation (21).

10. Dispositif d'attache de câble, selon la revendication précédente, **caractérisé en ce que** ladite séparation (21) comprend un harpon (22), défini sur son extrémité libre.

11. Dispositif d'attache de câble, selon les revendications précédentes 9 ou 10, **caractérisé en ce que** ladite mâchoire (12) comprend une paire de creux (32a, 23b), respectivement définis sur le côté de chacune desdites concavités (20a, 20b).

12. Dispositif d'attache de câble, selon la revendication précédente, **caractérisé en ce que** ladite gaine interverrouillable (30) comprend un corps tubulaire à dilatation, avec une section transversale correspondant substantiellement à la section transversale de ladite paire de concavités (20a, 20b), ladite gaine interverrouillable (30) étant adaptée pour être associée de manière amovible à ladite mâchoire profilée (12).

13. Dispositif d'attache de câble, selon la revendication précédente, **caractérisé en ce que** ledit corps tubulaire à dilatation comprend une encoche longitudinale (31), définie sur ledit corps tubulaire à dilatation, longitudinalement et sur toute sa longueur, ladite encoche définissant une paire de bords (32).

14. Dispositif d'attache de câble, selon la revendication précédente, **caractérisé en ce que** ledit corps tubulaire à dilatation comprend une pluralité de fentes longitudinales, définies sur ledit corps tubulaire à dilatation, longitudinalement et sur toute sa longueur, lesdites fentes longitudinales étant disposées sur des points prédéterminés pour définir seulement localement lesdits bords (32a, 32b).

15. Dispositif d'attache de câble, selon la revendication précédente, **caractérisé en ce que** ledit corps tubulaire à dilatation comprend une paire de bandes de support (33a, 33b), faites d'une seule pièce avec ledit corps tubulaire et définies en position diamétralement opposée par rapport à ladite encoche (31), ou à ladite pluralité de fentes longitudinales, et ayant une section transversale correspondant substantiellement à la section transversale de ladite paire de creux (23a, 23b).
